# EUROPEAN PATENT APPLICATION

(11) **EP 2 559 898 A1**
(43) Date of publication of application: **20.02.2013**
(21) Application number: 11177737.1
(22) Date of filing: 17.08.2011
(51) Int. Cl.: F03G 7/06

(54) **Thermoelectric actuator**

(71) Applicant: Honeywell Technologies Sarl, 1180 Rolle (CH)
(72) Inventor: Prajzner, Vaclav, 63800 Brno (CZ); Hrabalek, Zdenek, 68352 Krenovice u Slavkova (CZ)
(74) Representative: Sturm, Christoph

(57) **Abstract**

Thermoelectric actuator (10) for controlling a device like a heating device or a cooling device, comprising: a housing (11) having a section (12) through which the actuator is mountable to the device to be controlled; a moveable stem (14), whereby the movement of the stem (11) controls the device to be controlled; an expandable and contractible element (15) acting on the stem (14); a thermoelectric element (16) acting on the expandable and contractible element (15); whereby the thermoelectric element (16) comprises a Peltier element (17); and whereby the Peltier element (17) heats or cools the expandable and contractible element (15) depending on an electrical current flow through the Peltier element (17), whereby the heating causes an expansion of the expandable and contractible element (15) and the cooling causes a contraction of the expandable and contractible element (15).

## Description

The invention relates to a thermoelectric actuator.

The applicant Honeywell sells under the product names "MT010-N" and "MT01 0-3MN" thermoelectric actuators. Such thermoelectric actuators are used within room-temperature controllers for the regulation of heating devices or cooling devices such as radiators, floor heating systems, chilled ceilings, convectors and the like. Such a thermoelectric actuator comprises a housing having an adapter section through which the respective actuator is mountable to the device to be controlled. Such a thermoelectric actuator further comprises a moveable stem, an expandable and contractible element and a thermoelectric element all positioned inside the housing, whereby the movement of the stem controls the device to be controlled, whereby the expandable and contractible element acts on the stem in such a way that an expansion of the expandable and contractible element causes a movement of the stem in a first direction and that a contraction of the expandable and contractible element causes a movement of the stem in a second direction, and whereby the thermoelectric element acts on the expandable and contractible element in such a way that a heating of the expandable and contractible element by the thermoelectric element causes an expansion of the expandable and contractible element. Further details of such thermoelectric actuators can be taken from the Honeywell product leaflet "Honeywell; MT010-N, MN010-3MN; small linear thermoelectric actuators, ENOB-0622GE51 R1007, pages 1 to 4, year 2007".

Against this background, a novel thermoelectric actuator is provided which requires less electrical energy.

According to the invention, the thermoelectric element of the thermoelectric actuator comprises a Peltier element; whereby the Peltier element heats or cools the expandable and contractible element depending on an electrical current flow through the Peltier element, whereby the heating causes an expansion of the expandable and contractible element and the cooling causes a contraction of the expandable and contractible element.

The Peltier element provides a heat pump, whereby the Peltier element pumps thermal energy from the ambient into the expandable and contractible element for heating the expandable and contractible element, and whereby the Peltier element pumps thermal energy from expandable and contractible element into the ambient for cooling the expandable and contractible element. This allows harvesting of thermal energy from the ambient when heating the expandable and contractible element and allows thereby a reduction of electrical energy required by the thermoelectric actuator.

According to a preferred embodiment of the present invention, a thermal insulator is positioned inside the housing surrounding partially the expandable and contractible element. This allows an additional reduction of electrical energy required by the thermoelectric actuator.

Preferably, the Peltier element is with a first side in mechanical contact with the expandable and contractible element and with a second side in mechanical contact with a section of the housing. When the electrical current flows in a first direction through the Peltier element, the first side of the Peltier element is relative hot and the second side of the Peltier element is relative cold thereby heating the expandable and contractible element. When the electrical current flows in a second direction through the Peltier element, the first side of the Peltier element is relative cold and the second side of the Peltier element is relative hot thereby cooling the expandable and contractible element. Such a design is very effective and allows an additional reduction of electrical energy required by the thermoelectric actuator.

According to a preferred embodiment of the present invention, the thermoelectric element comprises a microcontroller, whereby the microcontroller controls the direction of the electrical current flow through the Peltier element, whereby the Peltier element heats the expandable and contractible element when the electrical current flows in a first direction through the Peltier element, and whereby the Peltier element cools the expandable and contractible element when the electrical current flows in a second direction through the Peltier element. The microcontroller provides an accurate and energy efficient control of the valve stem position and thereby of the thermoelectric actuator.

Preferred developments of the invention are provided by the dependent claims and the description which follows. Exemplary embodiments are explained in more detail on the basis of the drawing, in which:

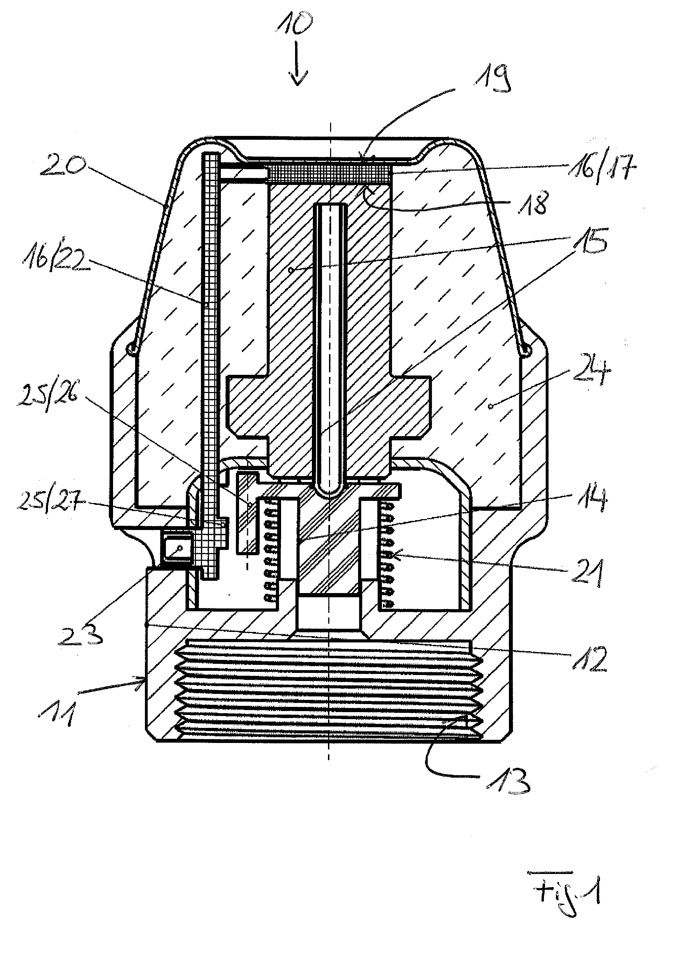

- Figure 1: shows a cross sectional view through a thermoelectric actuator according to an embodiment of the invention.

The present invention relates to a thermoelectric actuator, namely to a thermoelectric actuator used within a room-temperature controller for the regulation of a heating device or cooling device such as a radiator, a floor heating system, a chilled ceiling, a convector and the like.

The thermoelectric actuator 10 shown in Figure 1 comprises a housing 11 having a section 12 through which the thermoelectric actuator 10 is mountable to the device to be controlled by the thermoelectric actuator 10, namely to the heating device or cooling device to be controlled by the thermoelectric actuator 10. In the shown embodiment, the section 12 comprises an internal thread 13 through which the thermoelectric actuator 10 can be screwed onto a section of the device to be controlled (not shown) by the thermoelectric actuator 10, said section of the device to be controlled having an outside thread.

The housing 11 defines an interior of the thermoelectric actuator 10, whereby a moveable stem 14 is positioned inside the housing 11, namely inside the interior defined by the housing 11. A movement of the stem 14 controls the device to be controlled. In the shown embodiment, the stem 14 is moveable in linear direction. When the thermoelectric actuator 10 is mounted on the device to be controlled by the thermoelectric actuator 10, the stem 14 acts for example on a valve plunger of a valve of the heating device or cooling device in order to open or close the valve of the heating device or cooling device to be controlled.

An expandable and contractible element 15 is positioned inside the housing 11. The expandable and contractible element 15 acts on the stem 14 in such a way that an expansion of the expandable and contractible element 15 causes a movement of the stem 14 in a first direction and that a contraction of the expandable and contractible element 15 causes a movement of the stem 14 in a second, opposite direction.

The expandable and contractible element 15 is preferably a wax element or wax can.

In addition, a thermoelectric element 16 is positioned inside the housing 11. The thermoelectric element 16 comprises a Peltier element 17. The Peltier element 17 acts on the expandable and contractible element 15 in such a way that the Peltier element 17 heats or cools the expandable and contractible element 15 depending on an electrical current flow direction through the Peltier element 17.

The Peltier element 17 heats the expandable and contractible element 15 when the electrical current flows in a first direction through the Peltier element 17, whereby the heating of the expandable and contractible element 15 by the Peltier element 17 causes an expansion of the expandable and contractible element 15 and thereby a movement of the stem 14 in the first direction.

The Peltier element 17 cools the expandable and contractible element 15 when the electrical current flows in a second direction through the Peltier element 17, whereby the cooling of the expandable and contractible element 15 by the Peltier element 17 causes a contraction of the expandable and contractible element 15 and thereby a movement of the stem 14 in the second direction.

The Peltier element 17 provides a heat pump, whereby the Peltier element 17 pumps thermal energy from the ambient into the expandable and contractible element 15 for heating the expandable and contractible element 15, and whereby the Peltier element 17 pumps thermal energy from expandable and contractible element 15 into the ambient for cooling the expandable and contractible element 15.

The Peltier element 17 is with a first side 18 in mechanical contact with the expandable and contractible element 15 and with a second side 19 in mechanical contact with a section 20 of the housing 11.

When the electrical current flows in the first direction through the Peltier element 17, the first side 18 of the Peltier element 17 is relative hot and the second side 19 of the Peltier element 17 is relative cold thereby heating the expandable and contractible element 15 by pumping thermal energy from the ambient into the expandable and contractible element 15.

When the electrical current flows in the second direction through the Peltier element 17, the first side 18 of the Peltier element 17 is relative cold and the second side 19 of the Peltier element 17 is relative hot thereby cooling the expandable and contractible element 15 by pumping thermal energy from the expandable and contractible element 15 into the ambient.

In the shown embodiment, the stem 14 acts together with a spring 21.

The spring force of the spring 21 tends to move the stem in the second direction. When the Peltier element 17 heats the expandable and contractible element 15, the expansion of the expandable and contractible element 15 acts against the spring force and tends to move the stem 14 in the first direction against the spring force of the spring 21.

When the Peltier element 17 cools the expandable and contractible element 15, the contraction of the expandable and contractible element 15 reduces the forces acting against the spring force of the spring 20 which tends to move the stem 14 in the second direction.

The thermoelectric element 16 comprises in addition to the Peltier element 17 a microcontroller 22 being positioned inside the housing 11. An electrical power supply cable (not shown) is connectable to the thermoelectric actuator 10, namely to the microcontroller 22, by a connector 23. The microcontroller 22 controls the direction of the electrical current flow through the Peltier element 17, whereby the Peltier element 17 heats the expandable and contractible element 15 when the electrical current flows in the first direction through the Peltier element 17, and whereby the Peltier element 17 cools the expandable and contractible element 15 when the electrical current flows in a second direction through the Peltier element 17.

As discussed above, the Peltier element 17 pumps thermal energy from the ambient into the expandable and contractible element 15 for heating the expandable and contractible element 15 which provides a harvesting of thermal energy from the ambient and which allows to reduce the energy consumption of the thermoelectric actuator 10. The efficiency of the heating of the expandable and contractible element 15 is approximately 2, which means that 1 Watt of electrical energy provided to the Peltier element 17 by the microcontroller 22 results in approximately 2 Watts of thermal energy available for heating the expandable and contractible element 15.

A thermal insulator 24 is positioned inside the housing 11 surrounding partially the expandable and contractible element 15. The thermal insulator 24 provides a thermal insulation of the expandable and contractible element 15 from the ambient. As a result, a permanent heating of the expandable and contractible element 15 is not necessary because of the reduced loss on thermal energy during heating. This allows a further reduction of energy consumption of the thermoelectric actuator 10.

A stem position sensor 25 comprising a position indicator 26 being preferably assigned to the stem 14 and a position detector 27 being preferably assigned to the microcontroller 22 is positioned inside the housing 11 for detecting the actual position of the stem 14.

The microcontroller 22 controls the current flow through the Peltier element 17 and thereby the position of the stem 14 on basis of the stem position detected by the stem position sensor 25 and on basis of a difference between a nominal value and an actual value of a state variable of the device to be controlled, e.g. on basis of a difference between a nominal value and actual value of a temperature of the heating device or cooling device to be controlled by the thermoelectric actuator 10.

In case the microcontroller 22 detects a need to move the stem 14 in the first direction, the temperature of expandable and contractible element 15 must be increased. Thus the Peltier element 17 is powered in an electrical polarity that makes the second side 19 of the Peltier element 17 relative cold and first side of the Peltier element 17 relative hot.

In case the microcontroller 22 detects a need to move the stem 14 in the second direction, the temperature of expandable and contractible element 15 must be decreased. Thus the Peltier element 17 is powered in an electrical polarity that makes the first side 18 of the Peltier element 17 relative cold and the second side of the Peltier element 17 relative hot.

In case the position is in equilibrium and the microcontroller 22 detects no need to move the stem 14, the Peltier element 17 is not powered.

The novel thermoelectric actuator 10 uses a Peltier element 17 as a heat pump. The principle is to pump the heat from ambient into expandable and contractible element 15 and vice versa when needed. The expandable and contractible element 15 is insulated from ambient by the thermal insulator 24 thus permanent heating is not necessary. This provides a first part of energy savings. A second part of energy savings is provided by harvesting of thermal energy from ambient.

### List of reference signs

- 10: thermoelectric actuator
- 11: housing
- 12: section
- 13: internal thread
- 14: stem
- 15: expandable and contractible element
- 16: thermoelectric element
- 17: Peltier element
- 18: first side
- 19: second side
- 20: section
- 21: spring
- 22: microcontroller
- 23: connector
- 24: insulator
- 25: stem position sensor
- 26: position indicator
- 27: position detector

## Claims

1. Thermoelectric actuator (10) for controlling a device like a heating device or a cooling device, comprising:
a housing (11) having a section (12) through which the actuator is mountable to the device to be controlled;
a moveable stem (14), whereby the movement of the stem (11) controls the device to be controlled;
an expandable and contractible element (15) acting on the stem (14);
a thermoelectric element (16) acting on the expandable and contractible element (15);
**characterized in that**
the thermoelectric element (16) comprises a Peltier element (17);
the Peltier element (17) heats or cools the expandable and contractible element (15) depending on an electrical current flow through the Peltier element (17), whereby the heating causes an expansion of the expandable and contractible element (15) and the cooling causes a contraction of the expandable and contractible element (15).

2. Thermoelectric actuator as claimed in claim 1, **characterized in that** the thermoelectric element (16) comprises a microcontroller (22), whereby the microcontroller (22) controls the direction of the electrical current flow through the Peltier element (17), whereby the Peltier element (17) heats the expandable and contractible element (15) when the electrical current flows in a first direction through the Peltier element (17), and whereby the Peltier element (17) cools the expandable and contractible element (15) when the electrical current flows in a second direction through the Peltier element (17).

3. Thermoelectric actuator as claimed in claim 1 or 2, **characterized in that** the Peltier element (17) is with a first side (18) in mechanical contact with the expandable and contractible element (15) and with a second side in mechanical contact with a section (20) of the housing (11).

4. Thermoelectric actuator as claimed in claim 3, **characterized in that** when the electrical current flows in a first direction through the Peltier element (17), the first side (18) of the Peltier element (17) is relative hot and the second side (19) of the Peltier element (17) is relative cold thereby heating the expandable and contractible element (15).

5. Thermoelectric actuator as claimed in claim 3 or 4, **characterized in that** when the electrical current flows in a second direction through the Peltier element (17), the first side (18) of the Peltier element (17) is relative cold and the second side of the Peltier element (17) is relative hot thereby cooling the expandable and contractible element (15).

6. Thermoelectric actuator as claimed in one of claims 1 to 5, **characterized in that** the Peltier element (17) provides a heat pump, whereby the Peltier element (17) pumps thermal energy from the ambient into the expandable and contractible element (15) for heating the expandable and contractible element (15), and whereby the Peltier element (17) pumps thermal energy from expandable and contractible element (15) into the ambient for cooling the expandable and contractible element (15).

7. Thermoelectric actuator as claimed in one of claims 1 to 6, **characterized in that** the expandable and contractible element (15) is a wax element.

8. Thermoelectric actuator as claimed in one of claims 1 to 7, **characterized by** a thermal insulator (24) surrounding partially the expandable and contractible element (15).

9. Thermoelectric actuator as claimed in one of claims 1 to 8, **characterized in that** the expansion and contraction of the expandable and contractible element (15) causes a linear movement of the stem (14).

10. Thermoelectric actuator as claimed in one of claims 1 to 9, **characterized by** a stem position sensor (25) for detecting the actual position of the stem (14).

11. Thermoelectric actuator as claimed in claim 10, **characterized in that** the microcontroller (22) controls the current flow through the Peltier element (17) and thereby the position of the stem (14) on basis of the stem position detected by the stem position sensor (25).

12. Thermoelectric actuator as claimed in claim 11, **characterized in that** the microcontroller (22) further controls the current flow through the Peltier element (17) and thereby the position of the stem (14) on basis of a difference between a nominal value and actual value of a state variable of the device to be controlled.

13. Thermoelectric actuator as claimed in one of claims 1 to 12, **characterized in that** the moveable stem (14) acts together with the expandable and contractible element (15) and a spring (22) in such a way that when the expandable and contractible element (15) is expanded due to the heating of the same, the expandable and contractible element (15) acts against a spring force of the spring (22) and tends to move the stem (14) in the first direction, and that when the expandable and contractible element 15 is contracted due to the cooling of the same, the spring force of the spring (20) tends to move the stem (14) in the second direction.
